# EUROPÄISCHE PATENTSCHRIFT

(11) **EP 4 240 622 B1**
(45) Veröffentlichungstag und Bekanntmachung des Hinweises auf die Patenterteilung: **06.08.2025**
(21) Anmeldenummer: 21835644.2
(22) Anmeldetag: 06.12.2021
(51) Int. Cl.: B60T 8/17

(54) **LEITTECHNISCHE EINRICHTUNG**
CONTROL DEVICE
SYSTÈME DE CONTRÔLE

(30) Priorität: 15.12.2020 DE 102020215948
(43) Veröffentlichungstag der Anmeldung: 13.09.2023
(73) Patentinhaber: Siemens Mobility GmbH, 81739 München (DE)
(72) Erfinder: HORN, Stephan, 91056 Erlangen (DE)
(74) Vertreter: Siemens Patent Attorneys
(86) Internationale Anmeldenummer: PCT/EP2021/084353
(87) Internationale Veröffentlichungsnummer: WO 2022/128562

(56) Entgegenhaltungen:
- EP-B1- 3 090 918
- CN-A- 104 570 761
- US-A1- 2004 064 235
- US-A1- 2004 238 693
- US-A1- 2008 033 605
- US-A1- 2009 128 318

## Beschreibung

Die Erfindung bezieht sich auf eine leittechnische Einrichtung für ein Fahrzeug, insbesondere Schienenfahrzeug, die geeignet ist, auf der Basis eines vorgegebenen Bremsmodells das Bremsen des Fahrzeugs zu steuern.

Leittechnische Einrichtungen der beschriebenen Art werden beispielsweise bei Eisenbahnzügen eingesetzt, um das Bremsen zu steuern. Bei ETCS(European Train Control System)-kompatiblen Eisenbahnzügen ist dabei bislang zu entscheiden, ob das sogenannte Lambda-Bremsmodell oder das sogenannte Gamma-Bremsmodell herangezogen werden soll.

Das Lambda-Bremsmodell ist geeignet für frei konfigurierbare Züge, jedoch ist dessen Anwendung nur zulässig für Geschwindigkeiten unter 200 km/h und es müssen alle Wagen vollständig mit UIC(union internationale des chemins de fer)-zugelassenen Komponenten ausgerüstet sein. Das Gamma-Bremsmodell ist keinerlei vergleichbaren Restriktionen unterworfen.

Aus der Druckschrift US 2009/0128318 A1 ist ein Verzögerungsregler für ein Fahrzeug bekannt. Dabei ist vorgesehen, dass eine elektronische Steuereinheit des Verzögerungsreglers verschiedene Zielverzögerungen berechnet. Beispielsweise berechnet die elektronische Steuereinheit eine erste Zielverzögerung, welche auf der Bremsbetätigung durch einen Fahrer basiert, als endgültige Zielverzögerung des Fahrzeugs, wenn ein hindernisbezogenes automatisches Bremsen und ein Bremsen durch eine automatische Fahrsteuerung nicht erforderlich sind. Wenn keine Bremsung durch die automatische Fahrsteuerung erforderlich ist, jedoch die hindernisbezogene automatische Bremsung erforderlich ist, berechnet die elektronische Steuereinheit eine zweite Zielverzögerung des Fahrzeugs für eine Warnbremsung und eine dritte Zielverzögerung des Fahrzeugs für eine Schadensminderungsbremsung und verwendet die zweite Zielverzögerung oder die dritte Zielverzögerung als endgültige Zielverzögerung des Fahrzeugs.

Weiterhin sind aus der Druckschrift EP 3 090 918 B1 ein System und ein Verfahren zur automatischen Steuerung eines geführten Fahrzeugs, das sich einem Streckenelement nähert, bekannt. Dabei ist vorgesehen, dass eine Steuereinheit in der Lage ist, für jede Position x des geführten Fahrzeugs automatisch die Geschwindigkeit des geführten Fahrzeugs mit der durch ein erstes Geschwindigkeitsprofil für die Position x definierten maximal zulässigen Geschwindigkeit zu vergleichen und automatisch ein zweites Geschwindigkeitsprofil für das geführte Fahrzeug zu ermitteln, wobei das zweite Geschwindigkeitsprofil eine Geschwindigkeitsbegrenzung für das geführte Fahrzeug in Abhängigkeit von seiner Position im Vergleich zu der Position des Streckenelements definiert. Dabei definiert das zweite Geschwindigkeitsprofil insbesondere für mindestens eine Position x des geführten Fahrzeugs eine Geschwindigkeitsbegrenzung, die größer ist als die für diese Position x maximal zulässige Geschwindigkeit. Das zweite Geschwindigkeitsprofil hat beim Auslösen einer Notbremsung Vorrang vor dem ersten Geschwindigkeitsprofil, um die Geschwindigkeit des geführten Fahrzeugs mittels der Steuereinheit zu steuern.

Darüber hinaus ist aus der Druckschrift US 2004/0064235 A1 ein Fahrzeugdynamik-Vorhersagesystem zur Vorhersage der Fahrzeuggeschwindigkeit eines Fahrzeugs für einen vorbestimmten zukünftigen Zeitraum bekannt. Die Vorhersagen nutzen zukünftige Fahrzeugsteuerungseinstellungen, die für den Zeitraum erwartet werden. Eine Datenbank mit künstlicher Intelligenz, die mit einem Prozessor gekoppelt ist, der gewichtete Werte für neuronale Netzwerkmodelle verwendet, die die dynamische Leistung des Fahrzeugs darstellen, ist Teil des Fahrzeugdynamik-Vorhersagesystems. Das Fahrzeugdynamik-Vorhersagesystem umfasst ein Lokomotivkabineninstrument, das den Fahrern dabei helfen soll, die Zugkraftdynamik zu verstehen. Es stellt Informationen über die Kräfte und Geschwindigkeiten bereit, die in einem zukünftigen Zeitraum von vorgegebener Dauer erwartet werden. Das Lokomotivkabineninstrument umfasst einen Anzeigebildschirm und eine Tastatur, die es dem Fahrer ermöglichen, mit dem Fahrzeugdynamik-Vorhersagesystem zu interagieren und Anzeigen und zukünftige Steuereinstellungsdaten auszuwählen.

Der Erfindung liegt die Aufgabe zugrunde, eine leittechnische Einrichtung anzugeben, die universell einsetzbar ist und das Bremsen eines Fahrzeugs, insbesondere Schienenfahrzeugs, besonders gut steuern kann.

Diese Aufgabe wird erfindungsgemäß durch eine leittechnische Einrichtung mit den Merkmalen gemäß Patentanspruch 1 gelöst. Vorteilhafte Ausgestaltungen der erfindungsgemäßen leittechnischen Einrichtung sind in Unteransprüchen angegeben.

Ein wesentlicher Vorteil der erfindungsgemäßen Einrichtung ist darin zu sehen, dass sich in vorteilhafter Art und Weise erreichen lässt, dass geräteseitig oder fahrzeugführerseitig stets dasjenige Bremsmodell herangezogen wird, das für das jeweilige Fahrzeug in der jeweiligen Betriebssituation optimal ist.

Ein weiterer wesentlicher Vorteil der erfindungsgemäßen Einrichtung besteht darin, dass im Vorfeld keine Entscheidung für nur ein einziges Bremsmodell wie beispielsweise das Lambda-Bremsmodell oder das sogenannte Gamma-Bremsmodell getroffen werden muss, weil die Einrichtung beispielsweise beide dieser Bremsmodelle berücksichtigen kann.

Vorteilhaft ist es, wenn das zweite Bremsmodell für ein Fahrzeug einer vordefinierten Konfiguration ausgelegt ist.

Alternativ kann in vorteilhafter Weise vorgesehen sein, dass das zweite Bremsmodell für Fahrzeuge einer Mehrzahl an Konfigurationen ausgelegt ist, die zu einer vordefinierten Konfigurationsgruppe gehören, wobei sich Gruppenmitglieder der Konfigurationsgruppe hinsichtlich ihres Bremsverhaltens gleichen oder zumindest in einem vorgegebenen Maße ähneln.

Es ist vorteilhaft, wenn das oder zumindest eines der weiteren Bremsmodelle, insbesondere jedes der weiteren Bremsmodelle, für ein Fahrzeug einer vordefinierten weiteren Konfiguration ausgelegt ist, die sich von der Konfiguration und/oder den Konfigurationen, die für das zweite Bremsmodell herangezogen werden, unterscheidet.

Auch kann in vorteilhafter Weise vorgesehen sein, dass das weitere Bremsmodell oder zumindest eines der weiteren Bremsmodelle, insbesondere jedes der weiteren Bremsmodelle, für Fahrzeuge einer Mehrzahl an weiteren Konfigurationen ausgelegt ist, die sich von der Konfiguration und/oder den Konfigurationen, die für das zweite Bremsmodell herangezogen werden, unterscheiden.

Die leittechnische Einrichtung weist vorzugsweise einen fahrerseitigen Steuereingang zur Eingabe einer fahrerseitigen Vorgabe auf, mit der fahrerseitig eines der Bremsmodelle ausgewählt werden kann.

Alternativ oder zusätzlich kann die leittechnische Einrichtung in vorteilhafter Weise einen geräteseitigen Steuereingang zur Eingabe einer geräteseitigen Vorgabe aufweisen, mit der seitens einer Auswahleinrichtung eines der Bremsmodelle ausgewählt werden kann.

Die leittechnische Einrichtung wird vorzugsweise durch ein von einer Recheneinrichtung ausführbares Softwaremodul gebildet.

Der fahrerseitige und/oder geräteseitige Steuereingang der leittechnischen Einrichtung wird vorzugsweise jeweils durch eine softwareseitige Schnittstelle gebildet.

Als besonders vorteilhaft wird es angesehen, wenn die Auswahleinrichtung anhand von Simulationsrechnungen ermittelt, welches der Bremsmodelle für den jeweils nächsten Bremsvorgang und/oder den oder die jeweils nächsten zu befahrenden Streckenabschnitte und/oder die gesamte zu befahrende Strecke das bevorzugte ist, insbesondere die geringste Zugfolgezeit zwischen aufeinanderfolgenden Fahrzeugen erlaubt, und in Abhängigkeit von dem Simulationsergebnis die geräteseitige Vorgabe erzeugt.

Das erste Bremsmodell verarbeitet vorzugsweise im Falle eines aktiven Betriebs als Bremsparameter einen Bremshundertstelwert und steuert auf der Basis des Bremshundertstelwerts das Bremsen des Fahrzeugs.

Mit Blick auf möglichst universelle Einsatzmöglichkeiten der leittechnischen Einrichtung wird es als vorteilhaft angesehen, wenn das erste Bremsmodell ein Lambda-Bremsmodell, das zweite Bremsmodell ein Gamma-Bremsmodell und/oder das weitere oder jedes der weiteren Bremsmodelle Gamma-Bremsmodelle sind.

Die Erfindung bezieht sich darüber hinaus auf ein Fahrzeug, insbesondere Schienenfahrzeug. Erfindungsgemäß ist vorgesehen, dass dieses mit einer leittechnischen Einrichtung ausgestattet ist, wie sie oben beschrieben worden ist.

Bezüglich der Vorteile des erfindungsgemäßen Fahrzeugs und dessen vorteilhafter Ausgestaltungen sei auf die obigen Ausführungen im Zusammenhang mit der erfindungsgemäßen Einrichtung und deren vorteilhafter Ausgestaltungen verwiesen.

Die Erfindung bezieht sich darüber hinaus auf ein Verfahren zum Bremsen eines Fahrzeugs mit den Merkmalen gemäß Patentanspruch 13.

Bezüglich der Vorteile des erfindungsgemäßen Verfahrens und dessen vorteilhafter Ausgestaltungen sei auf die obigen Ausführungen im Zusammenhang mit der erfindungsgemäßen Einrichtung und deren vorteilhafter Ausgestaltungen verwiesen.

Die Erfindung wird nachfolgend anhand von Ausführungsbeispielen näher erläutert; dabei zeigen beispielhaft
- Figur 1: ein Ausführungsbeispiel für ein Schienenfahrzeug, das mit einer leittechnischen Einrichtung ausgestattet ist, bei der eine Auswahl eines Bremsmodells aus einer Vielzahl an Bremsmodellen fahrzeugführerseitig erfolgt,
- Figur 2: ein Ausführungsbeispiel für ein Schienenfahrzeug, das mit einer leittechnischen Einrichtung ausgestattet ist, bei der eine Auswahl eines Bremsmodells mittels einer Auswahleinrichtung auf der Basis von Zugdaten erfolgt oder zumindest erfolgen kann,
- Figur 3: ein Ausführungsbeispiel für ein Schienenfahrzeug, das mit einer leittechnischen Einrichtung ausgestattet ist, bei der eine Auswahleinrichtung auf der Basis von Simulationsrechnungen ein geeignetes Bremsmodell auswählt, und
- Figur 4: ein Ausführungsbeispiel für ein Schienenfahrzeug, das mit einer leittechnischen Einrichtung ausgestattet ist, bei der eine Auswahleinrichtung auf der Basis von Bremsmodellgruppen arbeitet.

In den Figuren werden der Übersicht halber für identische oder vergleichbare Komponenten stets dieselben Bezugszeichen verwendet.

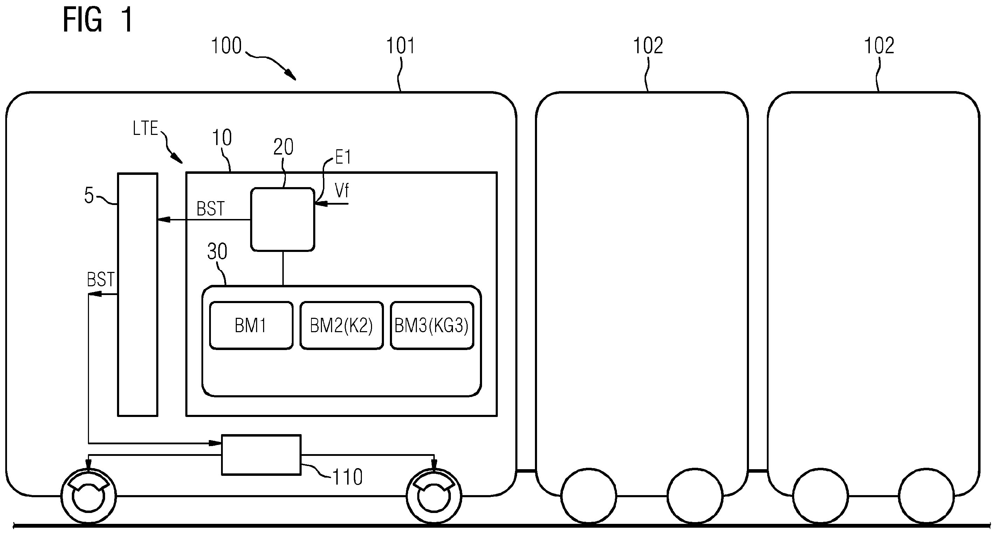

Die Figur 1 zeigt eine Recheneinrichtung 5, die mit einem Speicher 10 zusammenarbeitet. In dem Speicher 10 ist ein Softwaremodul 20 abgespeichert, das bei Ausführung durch die Recheneinrichtung 5 dazu führt, dass die Recheneinrichtung 5 eine leittechnische Einrichtung LTE bildet.

Die leittechnische Einrichtung LTE kann das Bremsen eines Fahrzeugs, in dem die leittechnische Einrichtung LTE integriert ist und bei dem es sich beispielsweise um ein mehrgliedriges Fahrzeug in Form eines Eisenbahnzuges 100 handeln kann, mittels eines Bremssteuersignals BST für eine in der Figur 1 nur im Triebfahrzeug 101 des Eisenbahnzuges 100 angedeutete Bremseinrichtung 110 steuern. Selbstverständlich können mittels des Bremssteuersignals BST auch Bremsen in den Waggons 102 des Eisenbahnzuges 100 gesteuert werden.

Die leittechnische Einrichtung LTE greift dabei auf einen Speicherbereich 30 zu, in dem zwei oder mehr unterschiedliche Bremsmodelle abgespeichert sind. Bei dem Ausführungsbeispiel gemäß Figur 1 sind in dem Speicherbereich 30 drei Bremsmodelle abgespeichert, nämlich ein erstes Bremsmodell BM1, ein zweites Bremsmodell BM2 und ein drittes bzw. weiteres Bremsmodell BM3. Alternativ kann der Speicherbereich 30 statt drei Bremsmodellen auch nur zwei oder vier oder mehr Bremsmodelle umfassen, vorteilhaft ist es jedoch, wenn in dem Speicherbereich 30 zumindest zwei unterschiedliche Bremsmodelle enthalten sind.

Die leittechnische Einrichtung LTE weist einen fahrerseitigen Steuereingang E1 auf, der die Eingabe einer fahrerseitigen Vorgabe Vf ermöglicht, mit der fahrerseitig eines der Bremsmodelle BM1, BM2 oder BM3 ausgewählt werden kann.

Besonders vorteilhaft ist es, wenn ein oder mehr der Bremsmodelle, beispielsweise die Bremsmodelle BM2 und BM3, jeweils für ein Fahrzeug einer vordefinierten Konfiguration K2, die die Zusammensetzung des Eisenbahnzugs 100 mit den jeweiligen Waggons 102 und deren Gewicht und Bremsvermögen, beschreibt, oder eine vordefinierte Konfigurationsgruppe KG3 ausgelegt sind. Fahrerseitig kann dann mittels der fahrerseitigen Vorgabe Vf am fahrerseitigen Steuereingang E1 dasjenige Bremsmodell ausgewählt werden, das der jeweils aktuellen Konfiguration des Eisenbahnzuges 100 entspricht.

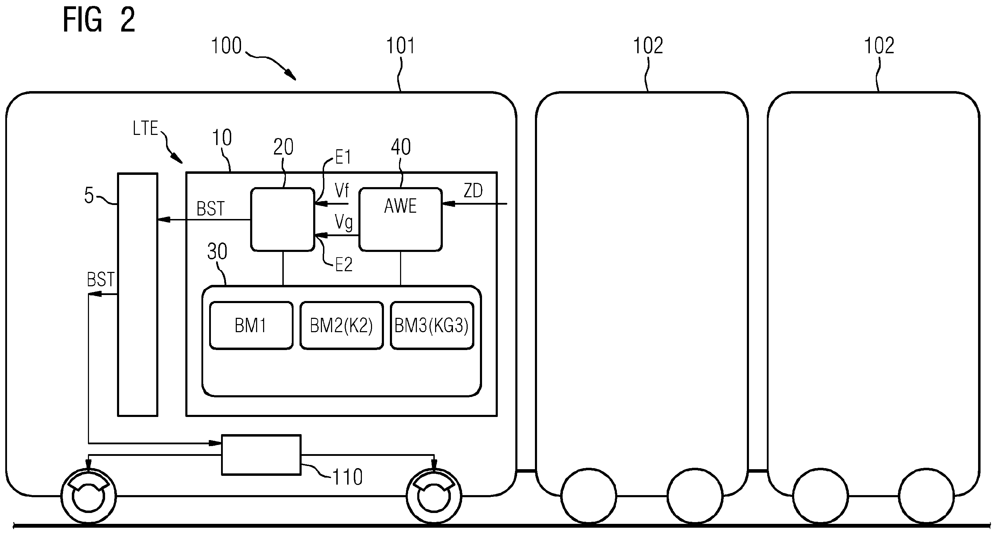

Die Figur 2 zeigt ein weiteres Ausführungsbeispiel für eine leittechnische Einrichtung LTE, die für einen Eisenbahnzug 100 geeignet ist. Bei dem Ausführungsbeispiel gemäß Figur 2 ist in dem Speicher 10 - verglichen mit dem Ausführungsbeispiel gemäß Figur 1 - außerdem ein Auswahlmodul 40 abgespeichert, das bei Ausführung durch die Recheneinrichtung 5 eine Auswahleinrichtung AWE bildet. Die Auswahleinrichtung AWE ist an einem softwareseitigen Eingang E2 des Softwaremoduls 20, der technisch einen geräteseitigen Steuereingang der leittechnischen Einrichtung LTE bildet, angeschlossen und kann dort eine geräteseitige Vorgabe Vg einspeisen.

Die Auswahleinrichtung AWE verarbeitet Zugdaten ZD, aus denen sich die jeweilige Konfiguration des Eisenbahnzugs 100 ermitteln lässt, und wählt in Abhängigkeit von der jeweils festgestellten Konfiguration dasjenige Bremsmodell BM1, BM2 oder BM3 aus, das zu der festgestellten Konfiguration passt oder der festgestellten Konfiguration zumindest am besten entspricht. Das von der Auswahleinrichtung AWE ausgewählte Bremsmodell wird nachfolgend von der leittechnischen Einrichtung LTE herangezogen, um das Bremsen des Fahrzeugs mittels des Bremssteuersignals BST zu steuern.

Im Übrigen gelten die obigen Ausführungen im Zusammenhang mit der Figur 1 beim Ausführungsbeispiel gemäß Figur 2 entsprechend.

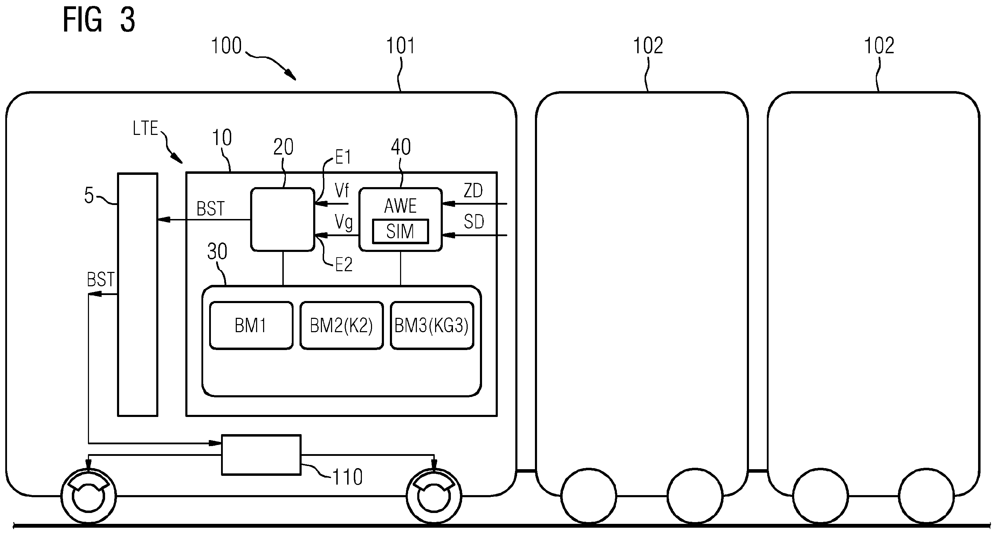

Die Figur 3 zeigt eine Ausführungsvariante des Ausführungsbeispiels gemäß Figur 2. Beim Ausführungsbeispiel gemäß Figur 3 ist in dem Auswahlmodul 40 außerdem ein Simulationsmodul SIM integriert, das der Auswahleinrichtung AWE Simulationsrechnungen ermöglicht. Werden in das Auswahlmodul Zugdaten ZD sowie Streckendaten SD eingespeist, so kann das Simulationsmodul SIM anhand von Simulationsrechnungen ermitteln, welches der Bremsmodelle für den jeweils nächsten Bremsvorgang und/oder den oder die jeweils nächsten zu befahrenden Streckenabschnitte und/oder die gesamte zu befahrende Strecke das bevorzugte ist, insbesondere die geringste Zugfolgezeit zwischen aufeinanderfolgenden Fahrzeugen erlaubt, und in Abhängigkeit von dem Simulationsergebnis die geräteseitige Vorgabe erzeugen.

Das durch die Simulation ermittelte beste Bremsmodell BM1, BM2 oder BM3 wird nachfolgend von der leittechnischen Einrichtung LTE weiterverarbeitet, um das Bremsen des Fahrzeugs mittels des Bremssteuersignals BST zu steuern.

Im Übrigen gelten die obigen Ausführungen im Zusammenhang mit den Figuren 1 und 2 beim Ausführungsbeispiel gemäß Figur 3 entsprechend.

Die in den Figuren gezeigten Bremsmodelle können aus Gründen der Übersicht nicht gezeigte Eingangsparameter verarbeiten, die in die leittechnischen Einrichtung LTE eingespeist werden, sei es fahrzeugführerseitig oder durch andere vorgeordnete Einrichtungen, die aus Gründen der Übersicht in den Figuren 1 bis 3 nicht näher gezeigt sind. Beispielsweise kann vorgesehen sein, dass eines der Bremsmodelle, zum Beispiel das erste Bremsmodell BM1, ein sogenanntes Lambda-Bremsmodell ist, das als Eingangsparameter einen das Bremsvermögen des Eisenbahnzugs 10 charakterisierenden Bremshundertstelwert verarbeitet.

Ein anderes der Bremsmodelle, beispielsweise das zweite Bremsmodell BM2 kann beispielsweise ein Gamma-Bremsmodell sein, das für eine einzige ganz bestimmte Zugkonfiguration ausgelegt ist und keinerlei weitere Eingangsdaten benötigt.

Wieder ein anderes der Bremsmodelle, beispielsweise das weitere Bremsmodell BM3, kann beispielsweise für eine Mehrzahl an Konfigurationen ausgelegt sein, die zu einer vordefinierten Konfigurationsgruppe KG3 gehören. Gruppenmitglieder der Konfigurationsgruppe KG3 gleichen sich dabei vorzugsweise hinsichtlich ihres Bremsverhaltens oder ähneln sich vorzugsweise zumindest in einem vorgegebenen Maße.

Auch kann vorgesehen sein, dass alle Bremsmodelle BM1 bis BM3 jeweils konfigurationsbezogen oder konfigurationsgruppenbezogen ausgelegt sind, also jeweils zu einer vordefinierten Konfiguration oder zu einer vordefinierten Konfigurationsgruppe gehören.

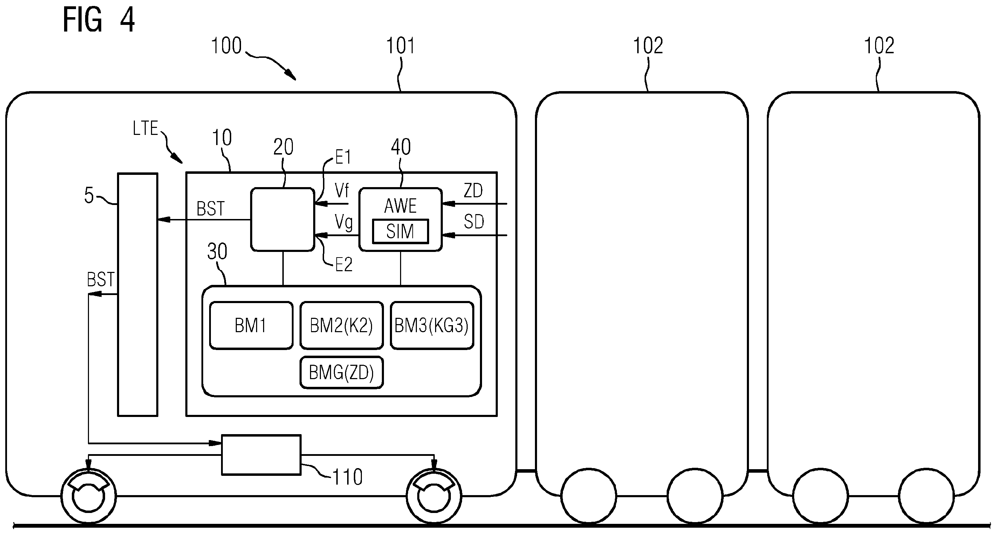

Darüber hinaus können auch Bremsmodellgruppen BMG (siehe Figur 4) zur Verfügung stehen, die jeweils zwei oder mehr Bremsmodelle umfassen und bei denen die Auswahl eines der Bremsmodelle dieser Bremsmodellgruppe zumindest auch unter Heranziehung eines ersten Parameters, der das aktuelle Bremsvermögen des Fahrzeugs beschreibt, und eines zweiten Parameters, der die Zugkonfiguration und/oder die Zuglänge beschreibt, erfolgt. Die beiden genannten Parameter können beispielsweise in Form oder als Teil der Zugdaten ZD in die Auswahleinrichtung AWE eingespeist werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 5: Recheneinrichtung
- 10: Speicher
- 20: Softwaremodul
- 30: Speicherbereich
- 40: Auswahlmodul
- 100: Eisenbahnzug
- 101: Triebfahrzeug
- 102: Waggon
- 110: Bremseinrichtung

- AWE: Auswahleinrichtung
- BM1: Bremsmodell
- BM2: Bremsmodell
- BM3: Bremsmodell
- BMG: Bremsmodellgruppe
- BST: Bremssteuersignal
- E1: fahrerseitiger Steuereingang
- E2: softwareseitiger Eingang
- K2: Konfiguration
- KG3: Konfigurationsgruppe
- LTE: leittechnische Einrichtung
- SD: Streckendaten
- SIM: Simulationsmodul
- Vf: fahrerseitige Vorgabe
- Vg: geräteseitige Vorgabe
- ZD: Zugdaten

## Patentansprüche

1. Leittechnische Einrichtung (LTE) für ein Fahrzeug, insbesondere Schienenfahrzeug (100),
- die geeignet ist, auf der Basis eines vorgegebenen ersten Bremsmodells (BM1) in einem ersten Bremsmodus das Bremsen des Fahrzeugs zu steuern,
- die dazu geeignet ist, anstelle des ersten Bremsmodells (BM1) ein zweites Bremsmodell (BM2), das sich von dem ersten Bremsmodell (BM1) unterscheidet, heranzuziehen und das Bremsen des Fahrzeugs auf der Basis des zweiten Bremsmodells (BM2) zu steuern, und
- die dazu geeignet ist, anstelle des ersten Bremsmodells (BM1) oder des zweiten Bremsmodells (BM2) mindestens ein weiteres anderes Bremsmodell (BM3), das sich von dem ersten und zweiten Bremsmodell (BM1, BM2) unterscheidet, heranzuziehen und das Bremsen des Fahrzeugs auf der Basis dieses weiteren Bremsmodells (BM3) zu steuern,
wobei
- eine zwei oder mehr Bremsmodelle umfassende Bremsmodellgruppe (BMG(ZD)) zur Verfügung steht, die das zweite Bremsmodell (BM2) und das eine weitere Bremsmodell (BM3) oder mehr weitere Bremsmodelle umfasst, und
- die Auswahl eines der Bremsmodelle (BM2-BM3) der Bremsmodellgruppe zumindest auch unter Heranziehung eines ersten Parameters, der das aktuelle Bremsvermögen des Fahrzeugs beschreibt, und/oder eines zweiten Parameters, der die Zugkonfiguration und/oder die Zuglänge beschreibt, erfolgt.

2. Leittechnische Einrichtung (LTE) nach Anspruch 1,
**dadurch gekennzeichnet, dass**
das zweite Bremsmodell (BM2) für ein Fahrzeug einer vordefinierten Konfiguration (K2) ausgelegt ist.

3. Leittechnische Einrichtung (LTE) nach einem der voranstehenden Ansprüche,
**dadurch gekennzeichnet, dass**
- das zweite Bremsmodell (BM2) für Fahrzeuge einer Mehrzahl an Konfigurationen ausgelegt ist, die zu einer vordefinierten Konfigurationsgruppe gehören,
- wobei sich Gruppenmitglieder der Konfigurationsgruppe hinsichtlich ihres Bremsverhaltens gleichen oder zumindest in einem vorgegebenen Maße ähneln.

4. Leittechnische Einrichtung (LTE) nach einem der voranstehenden Ansprüche,
**dadurch gekennzeichnet, dass**
das oder zumindest eines der weiteren Bremsmodelle (BM3), insbesondere jedes der weiteren Bremsmodelle (BM3), für ein Fahrzeug einer vordefinierten weiteren Konfiguration (KG3) ausgelegt ist, die sich von der Konfiguration (K2) und/oder den Konfigurationen, die für das zweite Bremsmodell (BM2) herangezogen werden, unterscheidet.

5. Leittechnische Einrichtung (LTE) nach einem der voranstehenden Ansprüche,
**dadurch gekennzeichnet, dass**
das weitere Bremsmodell (BM3) oder zumindest eines der weiteren Bremsmodelle (BM3), insbesondere jedes der weiteren Bremsmodelle (BM3), für Fahrzeuge einer Mehrzahl an weiteren Konfigurationen ausgelegt ist, die sich von der Konfiguration (K2) und/oder den Konfigurationen, die für das zweite Bremsmodell (BM2) herangezogen werden, unterscheiden.

6. Leittechnische Einrichtung (LTE) nach einem der voranstehenden Ansprüche,
**dadurch gekennzeichnet, dass**
die leittechnische Einrichtung (LTE) einen fahrerseitigen Steuereingang (E1) zur Eingabe einer fahrerseitigen Vorgabe (Vf) aufweist, mit der fahrerseitig eines der Bremsmodelle (BM1-BM3) ausgewählt werden kann.

7. Leittechnische Einrichtung (LTE) nach einem der voranstehenden Ansprüche,
**dadurch gekennzeichnet, dass**
die leittechnische Einrichtung (LTE) einen geräteseitigen Steuereingang (E2) zur Eingabe einer geräteseitigen Vorgabe (Vg) aufweist, mit der seitens einer Auswahleinrichtung (AWE) eines der Bremsmodelle (BM1-BM3) ausgewählt werden kann.

8. Leittechnische Einrichtung (LTE) nach einem der voranstehenden Ansprüche,
**dadurch gekennzeichnet, dass**
- die leittechnische Einrichtung (LTE) durch ein von einer Recheneinrichtung (5) ausführbares Softwaremodul (20) gebildet wird und
- der fahrerseitige und/oder geräteseitige Steuereingang (E1, E2) der leittechnischen Einrichtung (LTE) jeweils durch eine softwareseitige Schnittstelle gebildet wird.

9. Leittechnische Einrichtung (LTE) nach einem der voranstehenden Ansprüche,
**dadurch gekennzeichnet, dass**
die Auswahleinrichtung (AWE) anhand von Simulationsrechnungen ermittelt, welches der Bremsmodelle (BM1-BM3) für den jeweils nächsten Bremsvorgang und/oder den oder die jeweils nächsten zu befahrenden Streckenabschnitte und/oder die gesamte zu befahrende Strecke das bevorzugte ist, insbesondere die geringste Zugfolgezeit zwischen aufeinanderfolgenden Fahrzeugen erlaubt, und in Abhängigkeit von dem Simulationsergebnis die geräteseitige Vorgabe (Vg) erzeugt.

10. Leittechnische Einrichtung (LTE) nach einem der voranstehenden Ansprüche,
**dadurch gekennzeichnet, dass**
das erste Bremsmodell (BM1) im Falle eines aktiven Betriebs als Bremsparameter einen Bremshundertstelwert verarbeitet und auf der Basis des Bremshundertstelwerts das Bremsen des Fahrzeugs steuert.

11. Leittechnische Einrichtung (LTE) nach einem der voranstehenden Ansprüche,
**dadurch gekennzeichnet, dass**
das erste Bremsmodell (BM1) ein Lambda-Bremsmodell ist, das zweite Bremsmodell (BM2) ein Gamma-Bremsmodell ist und/oder das weitere oder jedes der weiteren Bremsmodelle (BM3) Gamma-Bremsmodelle sind.

12. Fahrzeug, insbesondere Schienenfahrzeug (100),
**dadurch gekennzeichnet, dass**
es mit einer leittechnischen Einrichtung (LTE) nach einem der voranstehenden Ansprüche ausgestattet ist.

13. Verfahren zum Bremsen eines Fahrzeugs, bei dem
- aus einer Auswahl an Bremsmodellen, die ein erstes Bremsmodell (BM1), ein zweites Bremsmodell (BM2) und ein weiteres Bremsmodell (BM3) oder mehr weitere Bremsmodelle umfasst, eines ausgewählt wird und
- das Bremsen des Fahrzeugs auf der Basis des ausgewählten Bremsmodells erfolgt
wobei
- eine zwei oder mehr Bremsmodelle umfassende Bremsmodellgruppe (BMG(ZD)) zur Verfügung steht, die das zweite Bremsmodell (BM2) und das eine weitere Bremsmodell (BM3) oder mehr weitere Bremsmodelle umfasst, und
- die Auswahl eines der Bremsmodelle (BM2-BM3) der Bremsmodellgruppe zumindest auch unter Heranziehung eines ersten Parameters, der das aktuelle Bremsvermögen des Fahrzeugs beschreibt, und/oder eines zweiten Parameters, der die Zugkonfiguration und/oder die Zuglänge beschreibt, erfolgt.

## Claims

1. Control device (LTE) for a vehicle, in particular rail vehicle (100),
- which is suited to controlling the braking of the vehicle on the basis of a predetermined first braking model (BM1) in a first brake mode,
- which is suited to using a second braking model (BM2), which differs from the first braking model (BM1) instead of the first braking model (BM1) and to controlling the braking of the vehicle on the basis of the second braking model (BM2), and
- which is suited to using at least one further other braking model (BM3), which differs from the first and second braking model (BM1, BM2) instead of the first braking model (BM1) or the second braking model (BM2), and to controlling the braking of the vehicle on the basis of this further braking model (BM3),
wherein
- a braking model group (BMG(ZD)) comprising two or more braking models is available and comprises the second braking model (BM2) and the one further braking model (BM3) or more further braking models, and
- the selection of one of the braking models (BM2-BM3) of the braking model group is carried out at least also using a first parameter, which describes the current brake ability of the vehicle, and/or a second parameter, which describes the train configuration and/or the train length.

2. Control device (LTE) according to claim 1,
**characterised in that**
the second braking model (BM2) is designed for a vehicle of a predefined configuration (K2).

3. Control device (LTE) according to one of the preceding claims, **characterised in that**
- the second braking model (BM2) is designed for vehicles of a plurality of configurations which belong to a predefined configuration group,
- wherein in respect of their brake behaviour group members of the configuration group are identical or similar at least to a predetermined degree.

4. Control device (LTE) according to one of the preceding claims,
**characterised in that**
the or at least one of the further braking models (BM3), in particular each of the further braking models (BM3), is designed for a vehicle of a predefined further configuration (KG3), which differs from the configuration (K2) and/or the configurations which are used for the second braking model (BM2).

5. Control device (LTE) according to one of the preceding claims,
**characterised in that**
the further braking model (BM3) or at least one of the further braking models (BM3), in particular each of the further braking models (BM3), is designed for vehicles of a plurality of further configurations, which differ from the configuration (K2) and/or the configurations which are used for the second braking model (BM2).

6. Control device (LTE) according to one of the preceding claims,
**characterised in that**
the control device (LTE) has a driver-side control input (E1) for inputting a driver-side specification (Vf), with which one of the braking models (BM1-BM3) can be selected on the driver side.

7. Control device (LTE) according to one of the preceding claims,
**characterised in that**
the control device (LTE) has a control input (E2) on the device side for inputting a specification (Vg) on the device side, with which one of the braking models (BM1-BM3) can be selected by a selection facility (AWE).

8. Control device (LTE) according to one of the preceding claims,
**characterised in that**
- the control device (LTE) is formed by a software module (20) which can be executed by a computing facility (5), and
- the driver side and/or device side control input (E1, E2) of the control device (LTE) is formed in each case by a software-side interface.

9. Control device (LTE) according to one of the preceding claims,
**characterised in that**
the selection facility (AWE) uses simulation calculations to determine which of the braking models (BM1-BM3) is the preferred for the next braking process and/or the section(s) of track next to be travelled and/or the entire track to be travelled in each case, in particular the least signal headway between consecutive vehicles, and generates the device-side specification (Vg) as a function of the simulation result.

10. Control device (LTE) according to one of the preceding claims,
**characterised in that**
in the case of an active operation the first braking model (BM1) processes a brake hundredth value as a brake parameter and controls the braking of the vehicle on the basis of the brake hundredth control value.

11. Control device (LTE) according to one of the preceding claims,
**characterised in that**
the first braking model (BM1) is a Lambda braking model, the second braking model (BM2) is a Gamma braking model and/or the further or each of the further braking models (BM3) are Gamma braking models.

12. Vehicle, in particular rail vehicle (100),
**characterised in that**
it is equipped with a control device (LTE) according to one of the preceding claims.

13. Method for braking a vehicle, in which
- one braking model is selected from a selection of braking models, which comprises a first braking model (BM1), a second braking model (BM2) and a further braking model (BM3) or more further braking models, and
- the braking of the vehicle is carried out on the basis of the selected braking model,
wherein
- a braking model group (BMG(ZD)) comprising two or more braking models is available and comprises the second braking model (BM2) and the one further braking model (BM3) or more further braking models, and
- the selection of one of the braking models (BM2-BM3) of the braking model group is carried out at least also using a first parameter, which describes the current brake ability of the vehicle, and/or a second parameter, which describes the train configuration and/or the train length.

## Revendications

1. Dispositif (LTE) de la technique de conduite pour un véhicule, en particulier un véhicule (100) ferroviaire,
- qui est propre à commander le freinage du véhicule, dans un premier mode de freinage, sur la base d'un premier modèle (BM1) de freinage donné à l'avance,
- qui est propre à tirer parti, au lieu du premier modèle (BM1) de freinage, d'un deuxième modèle (BM2) de freinage, qui se distingue du premier modèle (BM1) de freinage, et à commander le freinage du véhicule sur la base du deuxième modèle (BM2) de freinage, et
- qui est propre à tirer parti, au lieu du premier modèle (BM1) de freinage ou du deuxième modèle (BM2) de freinage, d'au moins un autre modèle (BM3) de freinage, qui se distingue du premier et du deuxième modèles (BM1, BM2) de freinage, et à commander le freinage du véhicule sur la base de cet autre modèle (BM3) de freinage,
dans lequel
- est à disposition un groupe (BMG(ZD)) de modèles de freinage comprenant deux ou plusieurs modèles de freinage, qui comprend le deuxième modèle (BM2) de freinage et le un autre modèle (BM3) de freinage ou plusieurs autres modèles de freinage, et
- le choix de l'un des modèles (BM2-BM3) de freinage du groupe de modèles s'effectue au moins également en tirant parti d'un premier paramètre, qui décrit la puissance de freinage en cours du véhicule, et/ou d'un deuxième paramètre, qui décrit la configuration du train et/ou la longueur du train.

2. Dispositif (LTE) de la technique de conduite suivant la revendication 1,
**caractérisé en ce que**
le deuxième modèle (BM2) de freinage est conçu pour un train d'une configuration (K2) définie à l'avance.

3. Dispositif (LTE) de la technique de conduite suivant l'une des revendications précédentes,
**caractérisé en ce que**
- le deuxième modèle (BM2) de freinage est conçu pour des véhicules d'une pluralité de configurations, qui appartiennent à un groupe de configurations définies à l'avance,
- dans lequel les membres du groupe de configurations sont pareils en ce qui concerne leurs comportements au freinage ou du moins se ressemblent dans une mesure donnée à l'avance.

4. Dispositif (LTE) de la technique de conduite suivant l'une des revendications précédentes,
**caractérisé en ce que**
le ou au moins l'un des autres modèles (BM3) de freinage, en particulier chacun des autres modèles (BM3) de freinage, est conçu pour un véhicule ayant une autre configuration (KG3) définie à l'avance, qui se distingue de la configuration (K2) et/ou des configurations, dont on tire parti pour le deuxième modèle (BM2) de freinage.

5. Dispositif (LTE) de la technique de conduite suivant l'une des revendications précédentes,
**caractérisé en ce que**
l'autre modèle (BM3) de freinage ou du moins l'un des autres modèles (BM3) de freinage, en particulier chacun des autres modèles (BM3) de freinage, est conçu pour des véhicules d'une pluralité d'autres configurations, qui se distinguent de la configuration (K2) et/ou des configurations, dont on tire parti pour le deuxième modèle (BM2) de freinage.

6. Dispositif (LTE) de la technique de conduite suivant l'une des revendications précédentes,
**caractérisé en ce que**
le dispositif (LTE) de la technique de conduite a une entrée (E1) de commande du côté du conducteur, pour l'entrée d'une prescription (Vf) du côté du conducteur, par laquelle l'un des modèles (BM1-BM3) de freinage peut être sélectionné du côté du conducteur.

7. Dispositif (LTE) de la technique de conduite suivant l'une des revendications précédentes,
**caractérisé en ce que**
le dispositif (LTE) de la technique de conduite a une entrée (E2) de commande du côté d'un appareil pour l'entrée d'une prescription (Vg) du côté d'un appareil, par laquelle il peut être choisi l'un des modèles (BM1-BM3) de freinage de la part d'un dispositif (AWE) de sélection.

8. Dispositif (LTE) de la technique de conduite suivant l'une des revendications précédentes,
**caractérisé en ce que**
- le dispositif (LTE) de la technique de conduite est formé par un module (20) logiciel pouvant être exécuté par un dispositif (5) informatique et
- l'entrée (E1, E2) de commande du côté du conducteur et/ou du côté d'un appareil du dispositif (LTE) de la technique de conduite est formée respectivement par une interface du côté du logiciel.

9. Dispositif (LTE) de la technique de conduite suivant l'une des revendications précédentes,
**caractérisé en ce que**
le dispositif (AWE) de sélection détermine, à l'aide de calculs de simulation, celui des modèles (BM1-BM3) de freinage à préférer pour l'opération de freinage respective venant ensuite et/ou le ou les tronçons de voie respectifs à emprunter immédiatement ensuite et/ou toute la voie à emprunter, en particulier autorise le temps de succession de trains le plus petit entre des véhicules qui se succèdent, et produit la prescription (Vg) du côté de l'appareil en fonction du résultat de la simulation.

10. Dispositif (LTE) de la technique de conduite suivant l'une des revendications précédentes,
**caractérisé en ce que**
le premier modèle (BM1) de freinage traite, dans le cas d'un fonctionnement actif, comme paramètre de freinage, une valeur centésimale de freinage et commande le freinage du véhicule sur la valeur centésimale du freinage.

11. Dispositif (LTE) de la technique de conduite suivant l'une des revendications précédentes,
**caractérisé en ce que**
le premier modèle (BM1) de freinage est un modèle de freinage lambda, le deuxième modèle (BM2) de freinage est un modèle de freinage gamma et/ou l'autre ou chacun des autres modèles (BM3) de freinage sont des modèles de freinage gamma.

12. Véhicule, en particulier véhicule (100) ferroviaire,
**caractérisé en ce qu'**
il est équipé d'un dispositif (LTE) de la technique de conduite suivant l'une des revendications précédentes.

13. Procédé de freinage d'un véhicule, dans lequel
- dans une sélection de modèle de freinage, qui comprend un premier modèle (BM1), un deuxième modèle (BM2) de freinage et un autre modèle (BM3) de freinage et plusieurs autres modèles de freinage, on en choisit un et
- on effectue le freinage du véhicule sur la base du modèle de freinage sélectionné,
dans lequel
- est à disposition un groupe (BMG(ZD)) de modèles de freinage comprenant deux ou plusieurs modèles de freinage, qui comprend le deuxième modèle (BM2) de freinage et le un autre modèle (BM3) de freinage ou plusieurs autres modèles de freinage, et
- le choix de l'un des modèles (BM2-BM3) de freinage du groupe de modèles s'effectue au moins également en tirant parti d'un premier paramètre, qui décrit la puissance de freinage en cours du véhicule, et/ou d'un deuxième paramètre, qui décrit la configuration du train et/ou la longueur du train.
